# EUROPEAN PATENT APPLICATION

(11) **EP 3 731 186 A1**
(43) Date of publication of application: **28.10.2020**
(21) Application number: 19175344.1
(22) Date of filing: 20.05.2019
(51) Int. Cl.: G06T 7/73, H04N 5/232, G06T 19/00

(54) **METHOD OF POSE CHANGE NOTIFICATION AND RELATED INTERACTIVE IMAGE PROCESSING SYSTEM**

(30) Priority: 24.04.2019 US 201916392650
(71) Applicant: XRSpace CO., LTD., Taoyuan City 330 (TW)
(72) Inventor: Wu, Meng-Hau, 231 New Taipei City (TW); Tsai, Chung-Chih, 269 Yilan County (TW); Su, Shang-Chin, 112 Taipei City (TW)
(74) Representative: Straus, Alexander

(57) **Abstract**

A method (2) of pose change notification for an interactive image processing system performing a space scanning process includes receiving a current image and a previous image from a camera of the interactive image processing system (21); calculating a pose change of the camera of the interactive image processing system according to the current image and the previous image (22); and generating a notification to a user of the interactive image processing system when the pose change of the camera has met at least one threshold (23).

## Description

### Field of the Invention

The present disclosure relates to a method of pose change notification and related interactive image processing system, and more particularly, to a method of pose change notification and related interactive image processing system capable of generating notification to a user to gather images at critical points.

### Background of the Invention

Pose estimation can be used to estimate the pose of an image sensor based on images captured by itself. As a view angle and a location of the image sensor change, the content of captured images change, by analyzing the content of two images with different poses, a pose change of the image sensor can be estimated.

Space scanning is a technology to project a 3-dimentional (3D) environment into a virtual reality environment, and pose estimation can be an auxiliary tool to perform space scanning. In order to allow a user to construct the virtual reality environment by a 3D helmet equipped with an image sensor, the image sensor keeps capturing images when the user is moving around the real 3D environment. However, the image quality could be bad when the user moves too fast or without a regular speed, which leads to a low accuracy of pose estimation and a low quality of space scanning. For example, the estimated pose is inaccurate due to lack of correspondences from the blurry images, and the virtual reality environment is constructed by blurry images without fine details.

Therefore, how to improve the accuracy of the pose estimation to provide the constructed virtual reality environment with fine details has become a topic in the industry.

### Summary of the Invention

This in mind, the application aims at providing a method of pose change notification and related interactive image processing system capable of generating notification to a user to gather images at critical points.

As will be seen more clearly from the detailed description following below, an embodiment of the present disclosure discloses method of pose change notification for an interactive image processing system performing a space scanning process. The method includes receiving a current image and a previous image from a camera of the interactive image processing system; calculating a pose change of the camera of the interactive image processing system according to the current image and the previous image; and generating a notification to a user of the interactive image processing system when the pose change of the camera has met at least one threshold.

An embodiment of the present disclosure further discloses an interactive image processing system performing a space scanning process. The interactive image processing system includes a camera configured to generate a current image and a previous image; a processing device coupled to the camera, and configured to generate a control signal according to the current image and the previous image; a notification device coupled to the processing device, and configured to generate a notification to a user of the interactive image processing system according to the control signal; and a memory device coupled to the processing device, and configured to store a program code, wherein the program code instructs the processing device to perform a pose change notification process. The pose change notification process includes receiving the current image and the previous image from the camera; calculating a pose change of the camera according to the current image and the previous image; and generating the notification to the user when the pose change of the camera has met at least one threshold.

The interactive image processing system of the present disclosure is capable of generating notifications to the user based on pose estimation and pose change notification, the interactive image processing system is able to gather images at critical points. As a result, the interactive image processing system of the present disclosure is able to construct the virtual reality environment with sharp and fine details to improve user experience.

### Brief Description of the Drawings

FIG. 1 is a functional block diagram of an interactive image processing system according to an embodiment of the present disclosure.
FIG. 2 is a flowchart of a pose change notification process according to an embodiment of the present disclosure.
FIG. 3 is a flowchart of a pose calculation sub-process according to an embodiment of the present disclosure.
FIG. 4 is a functional block diagram of an interactive image processing system according to an embodiment of the present disclosure.

### Detailed Description

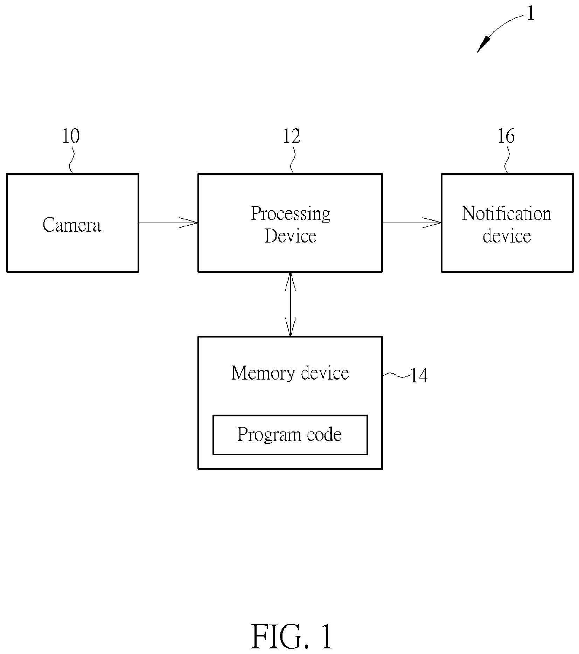

FIG. 1 is a functional block diagram of an interactive image processing system 1 according to an embodiment of the present disclosure. The interactive image processing system 1 includes a camera 10, a processing device 12, a memory device 14 and a notification device 16.

The interactive image processing system 1 may be a helmet utilized in virtual reality (VR), augmented reality (AR), mixed reality (MR) or extended reality (ER), which is not limited. The interactive image processing system 1 may perform space scanning to project a 3-dimentional (3D) environment into a virtual reality environment.

The camera 10 is coupled to the processing device 12, and configured to generate a plurality of images to the processing device 12. In one embodiment, the camera 10 captures images from a real environment for generating RGB (red-green-blue) images or depth images. In the case of RGB images, there is no absolute length unit in the virtual reality environment; while in the case of depth images, there is an absolute length unit in the virtual reality environment based on the depth of the images.

The processing device 12 is coupled to the camera 10, the memory device 14 and the notification device 16, and configured to generate a control signal to the notification device 16 according to the plurality of images.

The notification device 16 is coupled to the processing device 12, and configured to generate a notification to a user according to the control signal. In one embodiment, the notification device 16 is a display, a speaker, or a light emitting diode (LED), to indicate the user to freeze so that the camera 10 can capture sharp images, which helps the interactive image processing system 1 to construct the virtual reality environment with sharp and fine details to improve user experience. For example, the notification device 16 may be a display device to display a message of "Freeze!", which is not limited.

Specifically, given that a 360-degree full view virtual space is expected to be constructed, and the processing device 12 requires 24 images, wherein a view angle of each image is 15 degrees away from adjacent images. When the user moves the camera 10 to rotation angles including 0, 15, 30, ..., 330, and 345 degrees, the notification device 16 gives notifications to the user to notify that the user shall freeze so that the camera 10 can capture sharp images at the rotation angles. Note that the rotation angle is variable according to practical requirements. Alternatively, the notification device 16 gives notifications to the user to notify that the user shall turn his or her 3D helmet (i.e., the camera 10) back to a previous rotation angle when the user has missed the previous rotation angle, for example, the notification device 16 may display a message of "Turn back!".

In one embodiment, the user may move the camera 10 toward left, right, up, down, front and back directions, and the notification device 16 gives notifications to the user to notify that the user shall freeze so that the camera 10 can capture sharp images at translation distances, wherein the translation distance is where the content of two images have changed by one-third of the same scene. Note that the translation distance is variable according to practical requirements. Alternatively, the notification device 16 gives notifications to the user to notify that the user shall go back to a previous location when the user has missed the previous location, for example, the notification device 16 may display a message of "Move back!".

In one embodiment, when the scene is changing (e.g., an object is moved into the scene), the notification device 16 gives notifications to the user to notify that the user shall freeze so that the camera 10 can capture sharp images periodically. Note that a period or an elapsed time for image capture is variable according to practical requirements.

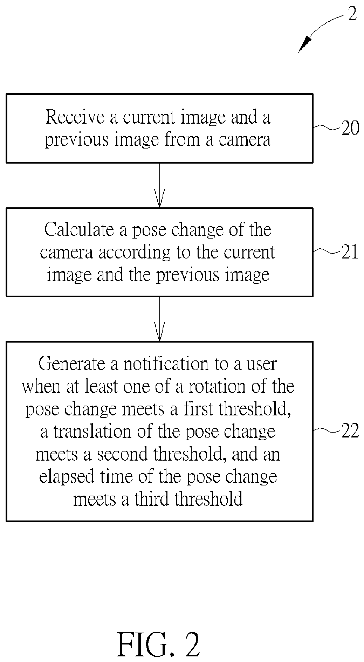

The memory device 14 is coupled to the processing device 12 and the camera 10, and configured to store a program code for instructing the processing device 12 to perform a pose change notification process 2, as shown in FIG. 2, the pose change notification process 2 includes the following steps.
Step 20: Receive a current image and a previous image from a camera.
Step 21: Calculate a pose change of the camera according to the current image and the previous image.
Step 22: Generate a notification to a user when at least one of a rotation of the pose change meets a first threshold, a translation of the pose change meets a second threshold, and an elapsed time of the pose change meets a third threshold.

In step 20, the processing device 12 receives a current image and a previous image from a camera.

In step 21, the processing device 12 calculates a previous pose corresponding to the previous image, calculates a current pose corresponding to the current image, and then subtracts the previous pose from the current pose to calculate the pose change.

In step 22, the processing device 12 generates a notification of image capture when the pose change has met at least one threshold. Specifically, the pose change may be associated with a plurality of parameters including a rotation angle, a translation distance, and an elapsed time, and the processing device 12 can generate a notification when at least one of the rotation angles, the translation distance, and the elapsed time has changed by a certain amount. Note that, the processing device 12 also can generate the notification when only one of the rotation angles, the translation distance, and the elapsed time has changed by a certain amount.

For example, when the rotation of the pose change meets a first threshold indicating a predetermined degrees (e.g., the rotation angle of the camera 10 has changed by 15 degrees), the processing device 12 generates a notification (e.g., a message of "Freeze!") to the user. In one embodiment, when the translation of the pose change meets a second threshold causing a content of the previous image and a content of the current image to change by an amount of a same scene (e.g., the translation distance of the camera 10 causes the contents of the previous image and the current image to change by one-third of the same scene), the processing device 12 generates a notification to the user. In one embodiment, when the elapsed time of the pose change meets a third threshold indicating a predetermined time (e.g., the elapsed time of the camera 10 has passed 5 seconds), the processing device 12 generates a notification to the user.

Therefore, by the pose change notification process 2, the processing device 12 is able to gather images at critical points regarding the rotation angle, the translation distance and the elapsed time, so that the interactive image processing system 1 is able to construct the virtual reality environment with sharp and fine details to improve user experience.

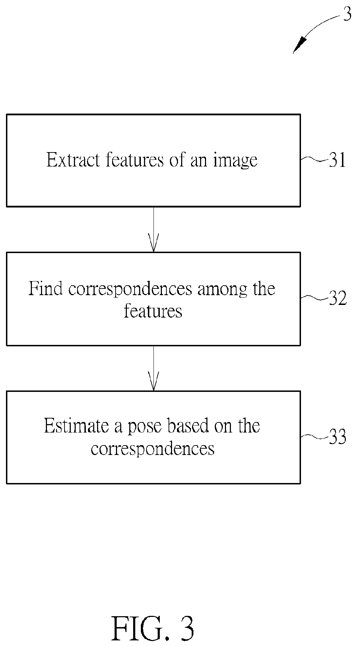

Note that in step 21, the processing device 12 further execute a pose calculation sub-process 3 in order to calculate the previous pose corresponding to the previous image and the current pose corresponding to the current image, respectively. As shown in FIG. 3, the pose calculation sub-process 3 includes the following steps.
Step 31: Extract features of an image.
Step 32: Find correspondences from the features.
Step 33: Estimate a pose based on the correspondences.

In step 31, the processing device 12 extracts features from an image according to red, green, and blue pixels of the image, wherein the feature corresponds to a region of the image in which a specific pattern (e.g., rectangular, triangle, circle, right angle, and so on) is detected by the processing device 12.

In step 32, the processing device 12 finds correspondences from the features. Specifically, the processing device 12 determines corresponding points according to the features, wherein the corresponding points in the 2-dimentional (2D) image are utilized to construct the virtual reality environment.

In step 33, the processing device 12 estimates a pose of the camera 10 based on the correspondences. The pose of the camera 10 is defined by six degree of freedom (6 Dof) including a translation described by 3-dimensional spatial coordinates (X, Y, Z) and a rotation described by 3-dimensional angles (θX, θY, θZ) between 3-dimensional axis and the coordinates.

In one embodiment, the memory device 14 stores 3-dimensional coordinates of the features for pose estimation, and the processing device 12 further refines the pose based on the stored 3-dimensional coordinates of the feature. By this step, the processing device 12 is able to reduce estimation errors from the pose estimation.

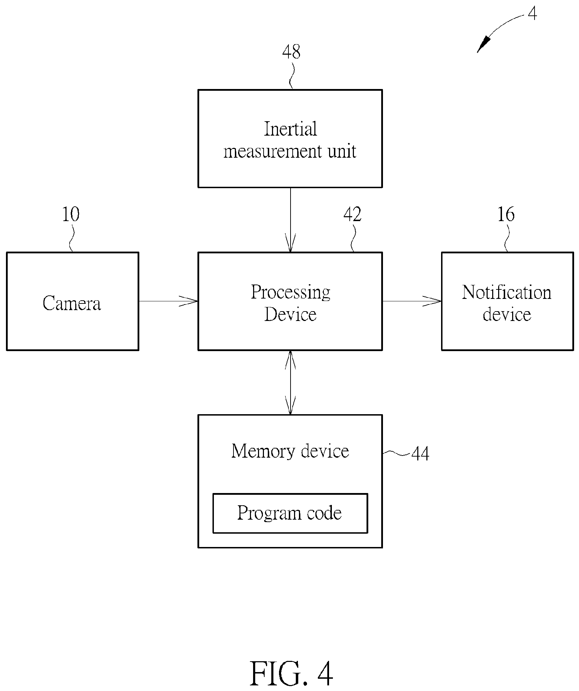

FIG. 4 is a functional block diagram of an interactive image processing system 4 according to an embodiment of the present disclosure. The interactive image processing system 4 includes a camera 10, a processing device 42, a memory device 44, a notification device 16, and an inertial measurement unit 48.

The interactive image processing systems 1 and 4 are similar, wherein same elements are denoted with the same symbols. The inertial measurement unit 48 is coupled to the processing device 42, and configured to generate a rotation described by 3-dimensional angles (θX, θY, θZ) of a 3D helmet worn by a user (or the camera 10) to the processing device 42. The processing device 42 further take the rotation generated by the inertial measurement unit 48 into account to perform pose estimation and pose change notification, which helps to improve an accuracy of pose estimation and pose change notification.

To sum up, the interactive image processing system of the present disclosure is capable of generating notifications to the user based on pose estimation and pose change notification, the interactive image processing system is able to gather images at critical points. As a result, the interactive image processing system of the present disclosure is able to construct the virtual reality environment with sharp and fine details to improve user experience.

## Claims

1. A method (2) of pose change notification for an interactive image processing system performing a space scanning process, **characterized by** comprising:
receiving a current image and a previous image from a camera of the interactive image processing system (20);
calculating a pose change of the camera of the interactive image processing system according to the current image and the previous image (21); and
generating a notification to a user of the interactive image processing system when the pose change of the camera of the interactive image processing system has met at least one threshold (22).

2. The method (2) of pose change notification of claim 1, **characterized in that** the at least one threshold comprises a first threshold associated with a rotation of the pose change, a second threshold associated with a translation of the pose change, and a third threshold associated with an elapsed time of the pose change.

3. The method (2) of pose change notification of claim 2, **characterized in that** the notification is generated: when the rotation of the pose change meets the first threshold indicating a predetermined degrees, when the translation of the pose change meets the second threshold causing a content of the previous image and a content of the current image to change by one-third of a same scene, and when the elapsed time of the pose change meets the third threshold indicating a predetermined time.

4. The method (2) of pose change notification of claim 1, **characterized in that** calculating the pose change of the camera of the interactive image processing system according to the current image and the previous image comprises:
calculating a previous pose corresponding to the previous image;
calculating a current pose corresponding to the current image; and
subtracting the previous pose from the current pose to calculate the pose change.

5. The method (2) of pose change notification of claim 1, **characterized in that** calculating the previous pose corresponding to the previous image or calculating the current pose corresponding to the current image comprises:
extracting features of the previous image or the current image (31);
finding correspondences from the features of the previous image or the current image (32); and
estimating the previous pose corresponding to the previous image or the current pose corresponding to the current image based on the correspondences of the previous image or the current image (33).

6. The method (2) of pose change notification of claim 5, **characterized in that** calculating the previous pose corresponding to the previous image or calculating the current pose corresponding to the current image further comprises:
storing coordinates of the features of the previous image or the current image; and
refining the previous pose corresponding to the previous image or the current pose corresponding to the current image based on the coordinates of the features of the previous image or the current image.

7. An interactive image processing system (1) performing a space scanning process, **characterized by** comprising:
a camera (10) configured to generate a current image and a previous image;
a processing device (12) coupled to the camera (10), and configured to generate a control signal according to the current image and the previous image;
a notification device (16) coupled to the processing device(12), and configured to generate a notification to a user according to the control signal; and
a memory device (14) coupled to the processing device (12), and configured to store a program code, wherein the program code instructs the processing device (12) to perform following steps in the space scanning process:
receiving the current image and the previous image from the camera (10);
calculating a pose change of the camera (10) according to the current image and the previous image;
comparing the pose change of the camera (10) with at least one threshold; and
generating the control signal to the notification device when the pose change of the camera (10) has met the at least one threshold.

8. The interactive image processing system (1) of claim 7, **characterized in that** the at least one threshold comprises a first threshold associated with a rotation of the pose change, a second threshold associated with a translation of the pose change, and a third threshold associated with an elapsed time of the pose change.

9. The interactive image processing system (1) of claim 8, **characterized in that** the notification is generated: when the rotation of the pose change meets the first threshold indicating a predetermined degrees, when the translation of the pose change meets the second threshold causing a content of the previous image and a content of the current image to change by one-third of a same scene, and when the elapsed time of the pose change meets the third threshold indicating a predetermined time.

10. The interactive image processing system (1) of claim 7, **characterized in that** calculating a pose change of the camera (10) according to the current image and the previous image comprises:
calculating a previous pose corresponding to the previous image;
calculating a current pose corresponding to the current image; and
subtracting the previous pose from the current pose to calculate the pose change.

11. The interactive image processing system (1) of claim 7, **characterized in that** calculating the previous pose corresponding to the previous image or calculating the current pose corresponding to the current image comprises:
extracting features of the previous image or the current image;
finding correspondences from the features of the previous image or the current image; and
estimating the previous pose corresponding to the previous image or the current pose corresponding to the current image based on the correspondences of the previous image or the current image.

12. The interactive image processing system (1) of claim 11, **characterized in that** calculating the previous pose corresponding to the previous image or calculating the current pose corresponding to the current image further comprises:
storing coordinates of the features of the previous image or the current image; and
refining the previous pose corresponding to the previous image or the current pose corresponding to the current image based on the coordinates of the features of the previous image or the current image.
